# EUROPEAN PATENT SPECIFICATION

(11) **EP 1 343 166 B1**
(45) Date of publication and mention of the grant of the patent: **24.02.2010**
(21) Application number: 03100498.9
(22) Date of filing: 28.02.2003
(51) Int. Cl.: G11B 27/034, G11B 20/12, G11B 20/10, H04N 5/76

(54) **Method and device of digital recording**
Verfahren und Gerät zum digitalen Aufzeichnen
Méthode et dispositif pour l'enregistrement numérique

(30) Priority: 07.03.2002 GB 2054104
(43) Date of publication of application: 10.09.2003
(73) Proprietor: Nokia Corporation, 02150 Espoo (FI)
(72) Inventor: Burda, Peter, 58432, Linköping (SE)
(74) Representative: Piotrowicz, Pawel Jan Andrzej

(56) References cited:
- WO-A-03/043320
- US-A- 5 371 551
- US-A1- 2002 090 195
- PATENT ABSTRACTS OF JAPAN vol. 2000, no. 20, 10 July 2001 (2001-07-10) -& JP 2001 067814 A (SAMSUNG ELECTRONICS CO LTD), 16 March 2001 (2001-03-16)

## Description

The present invention relates to a method of digital recording. In particular, it relates to a method of digital recording in digital television sets and digital television set-top boxes.

In digital television, television signals are broadcast in digital form through a terrestrial, cable or satellite network. Digital television has several advantages over longer-established analogue television. It permits transmission of higher resolution images with improved sound quality, while being bandwidth efficient.

A digital receiver is used to receive and decode digital television signals. The receiver can be integrated into a television set or, more usually, come in the form of a set-top box. If a so-called high definition television (HDTV) set is used, then the user can enjoy watching television programmes with a high resolution picture.

Digital television can also be used to provide enhanced services, such as on-screen shopping and internet access, and to give greater control to the user over the choice and presentation of broadcast content. For example, digital receivers can be used to record and playback programmes using an in-built hard disk drive. The user can pause, then resume playback and perform other operations similar to those found in existing video cassette recorders (VCRs) and digital versatile disc (DVD) recorders. An example of a digital receiver having an in-built hard disk is the Nokia™ Mediamaster DVB 9902 S.

A method of digital video recording and playback is described in US-A-5371551. In this system, a circular buffer stored on the disk drive is used to record audio and video programme signal data. Once the buffer is full, old data is overwritten with new data, starting at the beginning of the buffer. However, this system has the drawback that the size of the buffer is set to a predetermined size. This limits the amount of content that may be stored and, thus, the duration of pause.

The present invention seeks to provide an improved method of digital recording.

According to a first aspect of the present invention, there is provided a method of digital recording comprising receiving a stream of digital content; adding the stream of content to a first end of a file while deleting content from a second end of the file so as to maintain a given duration of content in the file; and reading out content from an intermediate point between the first and second ends of the file; wherein a first part of a file lies between the first end of the file and the intermediate point and wherein another part of the file lies between the intermediate point and the second end of the file; the method further comprising, in response to user instruction suspending deletion of content from the second end of the file; and dividing the other part of the file into second and third parts at a dividing point which would have been the second end of the file if deletion of content had not been suspended, the second part of the file comprises content which lies between the intermediate point and the dividing point and the third part of the file which comprises content between the dividing point and the second end of the file and which would have been deleted had deletion of content not been suspended; the method further comprising receiving user instructions to identify which content to record; creating a new file; copying the first and second parts of the file from the file to the new file; and deleting, from the file, content which is not identified as the content to be recorded.

The method may further comprise, after copying the first and second parts of the file from the file to the new file, adding new content to a first end of a new file and deleting old content from a second end of the new file so as to maintain a given duration of content in the new file; and reading out content from an intermediate point between the first and second ends of the new file, wherein a first part of a file lies between the first end of the new file and the intermediate point and a second part of the new file lies between the intermediate point and the second end of the new file

The intermediate point may be at the first end of the file.

The stream of data may be encoded. The stream of encoded data may be compressed. The stream of encoded data may be encoded according to an MPEG standard. The method may comprise decoding content read out from the file.

There may be provided a computer program for executing the method.

According to a second aspect of the present invention, there is provided a digital recording device comprising a storage medium and a processor; wherein the processor is configured to receive a stream of digital television content; to add the stream of content to a first end of a file while deleting content from a second end of the file so as to maintain a given duration of content in the file; and to read out content from an intermediate point between the first and second ends of the file; wherein a first part of a file lies between the first end of the file and the intermediate point and wherein another part of the file lies between the intermediate point and the second end of the file; wherein the processor is further configured, in response to user instruction, to suspend deletion of content from the second end of the file; and to divide the other part of the file into second and third parts at a dividing point which would have been the second end of the file if deletion of content had not been suspended, the second part of the file comprises content which lies between the intermediate point and the dividing point and the third part of the file which comprises content between the dividing point and the second end of the file and which would have been deleted had deletion of content not been suspended; wherein the processor is further configured to receive user instructions to identify content to record; to create a new file; to copy the first and second parts of the file from the file to the new file; and to delete, from the file, content which is not identified as the content to be recorded.

There may be provided a digital television receiver including the digital recording device. There may be provided a digital television set including the digital recording device.

An embodiment of the present invention will now be described by way of example with reference to the accompanying drawings in which:-
Figure 1 shows a digital receiver and a television set;
Figure 2 is a schematic diagram of a digital receiver;
Figure 3 shows a functional layer structure of a digital receiver shown in Figure 2;
Figure 4 shows a dynamic view buffer;
Figure 5 illustrates cropping a file;
Figure 6 illustrates cropping-to-file of a file;
Figure 7 illustrates truncating a file;
Figures 8a and 8b illustrate cropping using a FAT-based file system;
Figures 9a to 9h illustrate dynamic viewing;
Figures 10a to 10c illustrates channel swapping;
Figure 11 is a flow diagram of a method of digital recording;
Figures 12a to 12d show modification of a dynamic view buffer during recording;
Figure 13 shows a section record marker file;
Figure 14 is a flow diagram of a method of creating a record file and
Figures 15a to 15d show creation of a recording file.

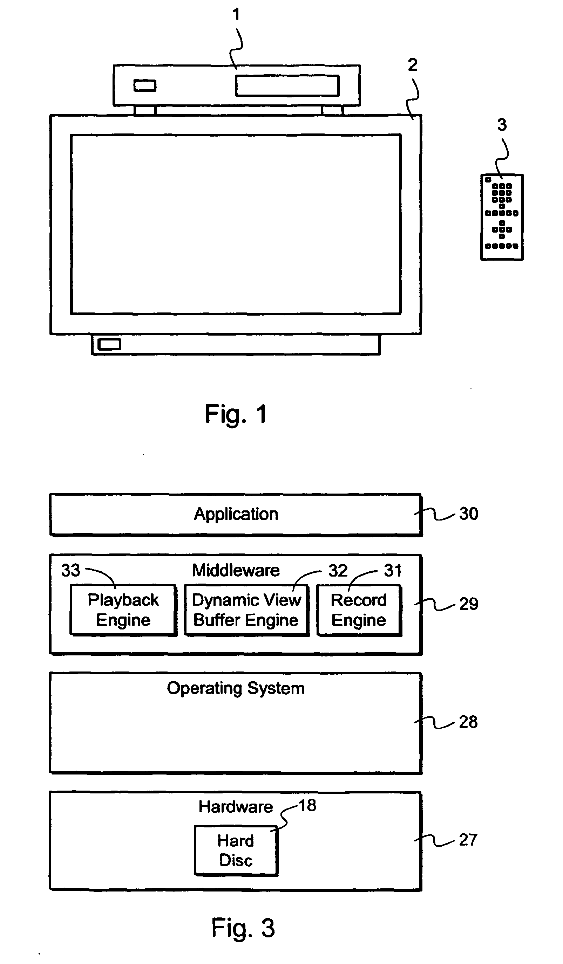

Referring to Figure 1, a user is provided with digital television service using a digital receiver 1 and a display device, such as a television set 2. The digital receiver 1 is in the form of a module, usually sold separately from the television set 2, which is commonly referred to as a "set-top box". The digital receiver 1, however, may be incorporated into the television set 2 and such television sets are usually referred to "integrated digital television sets". The television set 2 is capable of displaying high definition (HD) format images with a 16:9 aspect ratio and 1920×1080 pixels, although a television set capable of only displaying standard definition (SD) format images may also be used. A remote control unit 3 is provided for controlling the digital receiver 1 and, optionally, the television set 2.

A radio frequency (r.f.) signal carrying one or more digital television channels is transmitted by a broadcaster through a digital video broadcasting network comprising satellite, cable or terrestrial network (not shown) and is fed into the digital receiver 1. The digital receiver 1 processes the r.f. signal so as provide video and audio signals for the television set 2. The user can select a channel and watch television programmes. As will be explained in more detail later, the digital receiver 1 provides dynamic viewing functionality which allows viewing to be paused, then resumed without loss programme content, replaying of content and fast-forwarding.

The digital receiver 1 will now be described in more detail:

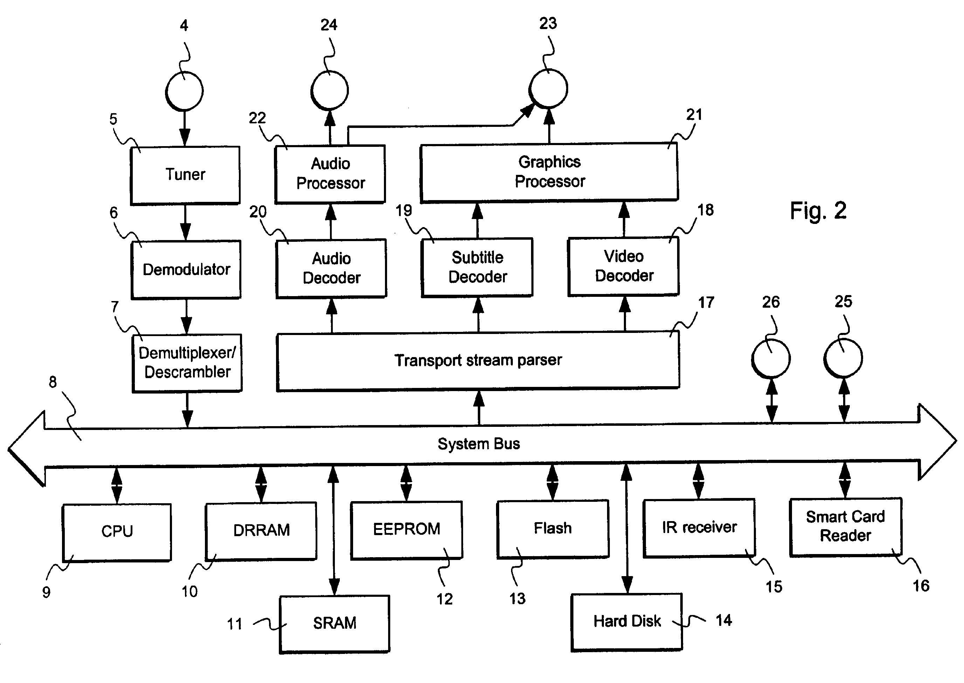

Referring to Figure 2, the digital receiver 1 includes a port 4, a tuner 5, a demodulator 6, a demultiplexer and decryptor unit 7 and a system bus 8. The demultiplexer and decryptor unit 7 is hereinafter referred to simply as the demultiplexer 7.

An r.f. signal (not shown) carrying one or more channels is received from the digital video broadcasting network (not shown) and fed via the port 4 into the tuner 5. The tuner 5 isolates a channel and produces a baseband signal. The baseband signal is fed into the demodulator 6 which produces a digital bit-stream comprising data packets. The bit-stream is passed into the demultiplexer 7 which sorts the data packets according to programme and produces a transport stream which is placed on the system bus 8.

The digital receiver 1 includes a central processing unit (CPU) 9, memory, in the form of dynamic random access memory (DRAM) 10, static random access memory (SRAM) 11, electrically erasable and programmable read-only memory (EEPROM) 12 and flash memory 13, and storage 14, in the form of a hard disk drive. In this case, the hard disk 14 has a capacity of 40 GB. The digital receiver 1 further includes an infrared receiver 15 for receiving signals from the remote control 3 (Figure 1) and a smart card reader 16 for receiving a smart card (not shown) holding data needed by the demultiplexer 7 for decrypting signals.

The digital receiver 1 includes a transport stream parser 17, a video decoder 18, a subtitle decoder 19 and an audio decoder 20, a graphics processor 21 and an audio processor 22.

The digital receiver 1 also includes several interfaces including a SCART connector 22 for providing video and audio signals to the television set 2, an audio connector 23 for providing audio-only signals to audio equipment (not shown), a serial port 24 and a return channel port 25 for connection to a modem (not shown). Additional ports may also be provided such as an auxiliary SCART connector for providing signals to a video cassette recorder (not shown) or a Universal Serial Bus (USB) connector.

The transport stream, which is fully or partially encoded, preferably according to the MPEG-2 standard, can be directed to the hard disk 14 for storage or to the transport stream parser 17. The transport stream parser 17 processes the transport stream, which comprises data packets, and determines to which decoder 18, 19, 20 to send data packets. The decoders 18, 19, 20 decode and decompress the data packets and pass them on to the processors 21, 22 for further processing. Signals from the video and audio processors 21, 22 are fed to the SCART and audio connectors 23, 24 for transmission to the television set 2 (Figure 1) and, optionally, speakers (not shown).

The CPU 9 controls operation of the digital receiver 1. When the digital receiver 1 is switched on, the CPU 9 loads and runs an operating system from EEPROM 12. The operating system includes device drivers to control hardware devices such as the hard disk 14. Instructions as to how the digital receiver 1 should operate are received from an application run by the CPU 9, loaded from the EEPROM 12, the flash memory 13 or the hard disk 14. In this example, applications are not platform specific. Therefore, additional software, often referred to as "middleware", is used to help applications and the operating system communicate.

Referring to Figure 3, a functional layer structure of the digital receiver 1 comprises digital receiver hardware 27, an operating system 28, middleware layer 29 and an applications layer 30. It will be appreciated that the middleware layer 29 and the operating system layer 28 may be combined.

As will be described in more detail later, the middleware layer 29 includes a dynamic view buffer engine 31 and a record engine 32 which are used control dynamic viewing by creating and managing files on the hard disk 14 and a playback engine 33 which is used to read files and transmit transport stream to the transport stream parser 17.

### Dynamic viewing

Dynamic viewing refers to a method of viewing television. Content from a live feed, in this case transport stream, is continuously stored in a buffer held on the hard disk 14. The buffer can then be accessed at different points thus allowing playback to be time-shifted.

If the user simply wishes to watch the live feed, then content is read from the buffer as soon as it is stored. If the user suspends viewing, content continues to be stored in the buffer. This allows the user to resume viewing at a later time from the point where viewing was suspended.

Content is not immediately erased when it is played back. This allows the user to replay content. However, a consequence of this is that the buffer will continue to grow unchecked. Thus, it is advantageous to manage the buffer so as to prevent this from happening unnecessarily.

### Dynamic view buffer

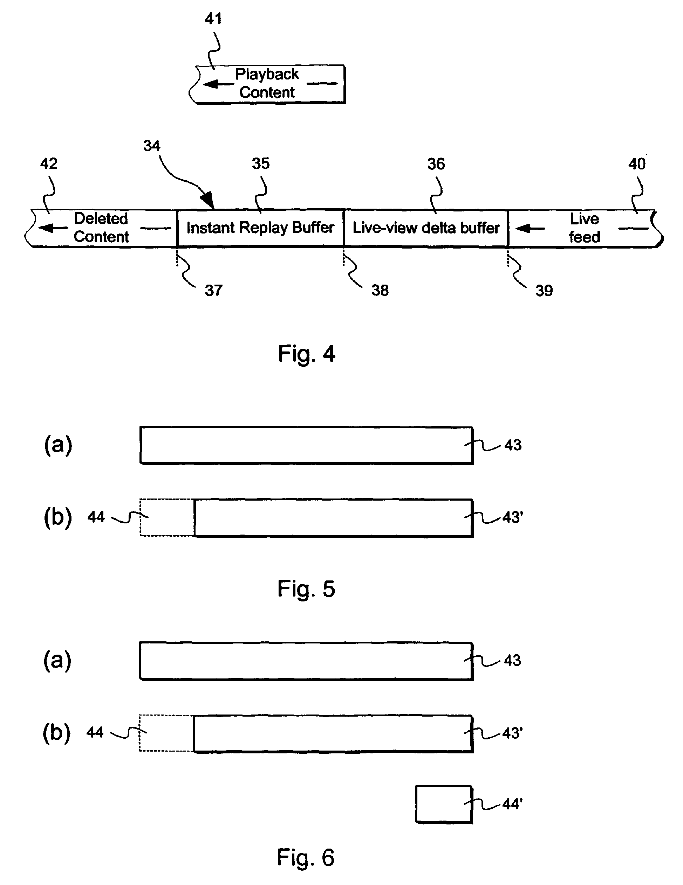

Referring to Figure 4, a playback file, hereinafter referred to as a dynamic view buffer 34, is stored on the hard disk 14. The dynamic view buffer 34 comprises first and second parts 35, 36, a start 37, an intermediate point 38 and an end 39.

Transport stream 40 comprising live feed is received from the demultiplexer 7 via the system bus 8 and is added to the second part 36 of the dynamic view buffer 34 at the end 39 of the buffer 34. Because of this, the second part 36 of the buffer 34 is referred to as the "live-view delta buffer" while the end 39 of the buffer 34 is referred to as the "live position".

Data 41 is taken from the intermediate point 38 of the buffer 34 for playback. Because of this, the intermediate point 38 is referred to as the "view position". The first part 35 of the buffer 34 is known as the "instant replay buffer" and comprises content preceding the view position which may, although not necessarily, have been watched by the user.

As will be explained in more detail later, as the stream of data 40 is fed into the end 39 of the buffer 34, the buffer 34 grows. If playback is paused, then the live-view delta buffer 36 grows, while the instant replay buffer 35 remains the same. If playback occurs, then the view position 38 shifts. Content which was once part of the live-view delta buffer 36 becomes part of the instant replay buffer 35. Thus, the live-view delta buffer 36 remains constant in size, while the instant replay buffer 35 grows. In either case, the size of the dynamic viewing buffer 34, and in particular the instant replay buffer 36, may be kept in check by deleting content 42 from the beginning 37 of the dynamic viewing buffer 34.

### File operation

To manage the dynamic view buffer 34 and other files on the hard disk 14, the record engine 31, the dynamic view buffer engine 32 and the playback engine 33 use file operations including crop, crop-to-file and truncate, which will now be described in more detail:

Referring to Figures 5a and 5b, a crop operation, **Crop()**, removes from the beginning of a file 43, a portion of data 44 thus leaving a cropped file 43'. The crop function is used to prevent the dynamic view buffer 34 from growing too large. The removed data portion 44 is lost.

Referring to Figures 6a and 6b, a crop-to-file operation, **Crop_to_file()**, not only crops the file 43 as described earlier, but stores the removed data portion 44 as a new file 44'.

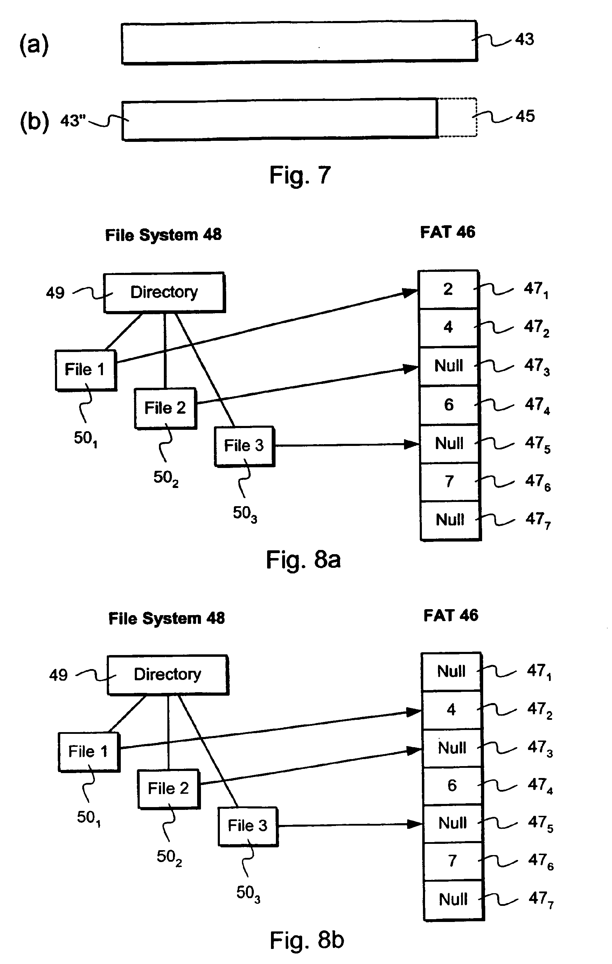

Referring to Figure 7a and 7b, a truncate operation, **Truncate()**,removes from the end of a file 43, a portion of data 45 leaving a truncated file 43".

Other conventional file operations such as copy, **Copy(),** are also used.

### Crop implementation using FAT-based fife system

In File Allocation Table (FAT)-based systems, implementation of a crop function is straightforward. Table entries of a FAT have a one-to-one correspondence to clusters of a hard disk. Each table entry is a pointer to another entry in the table. Thus, clusters in a file are represented by pointing to the first cluster of the file. The rest of the clusters are linked using FAT entries pointing to the next entry.

Thus, to implement a simple crop function, **Crop()**, a pointer to the first cluster is set to point to a cluster further down the linked list. Simple cropping is carried out in units of clusters.

Referring to Figures 8a, a FAT 46 comprises first, second, third, fourth, fifth, sixth and seventh entries 47₁, 47₂, 47₃, 47₄, 47₅, 47₆, 47₇. Each table entry 47₁, 47₂, 47₃, 47₄, 47₅, 47₆, 47₇ includes a pointer to another table entry 47₁, 47₂, 47₃, 47₄, 47₅, 47₆, 47₇ or a null value. For example, the first entry 47₁ includes a pointer to the second entry 47₂. The second entry 47₂ includes a pointer to the fourth entry 47₄.

A file system 48 includes a file directory 49 and first, second and third files 50₁, 50₂, 50₃. The first file 50₁ comprises clusters corresponding to first, second, fourth, sixth and seventh entries 47₁, 47₂, 47₄, 47₆, 47₇. The second file 50₂ comprises a cluster corresponding to the third entry 47₃. The third file 50₃ comprises a cluster corresponding to the fifth entry 47₅.

Referring to Figure 8b, the first file 51₁ is cropped by pointing to the second entry 47₂, thereby removing the cluster corresponding to the first entry 47₁.

The simple crop may be refined to allow smaller units of data to be cropped. A header is included in each cluster containing information relating to the starting position of blocks of data.

### Dynamic Viewing

The dynamic view buffer engine 32 (Figure 3) is used to create a dynamic view buffer 34 for each channel viewed. The playback engine 33 controls retrieval of content 41 (Figure 4) for supply to the transport stream parser 17 and cropping of the dynamic view buffer 34.

### Creating a dynamic view buffer

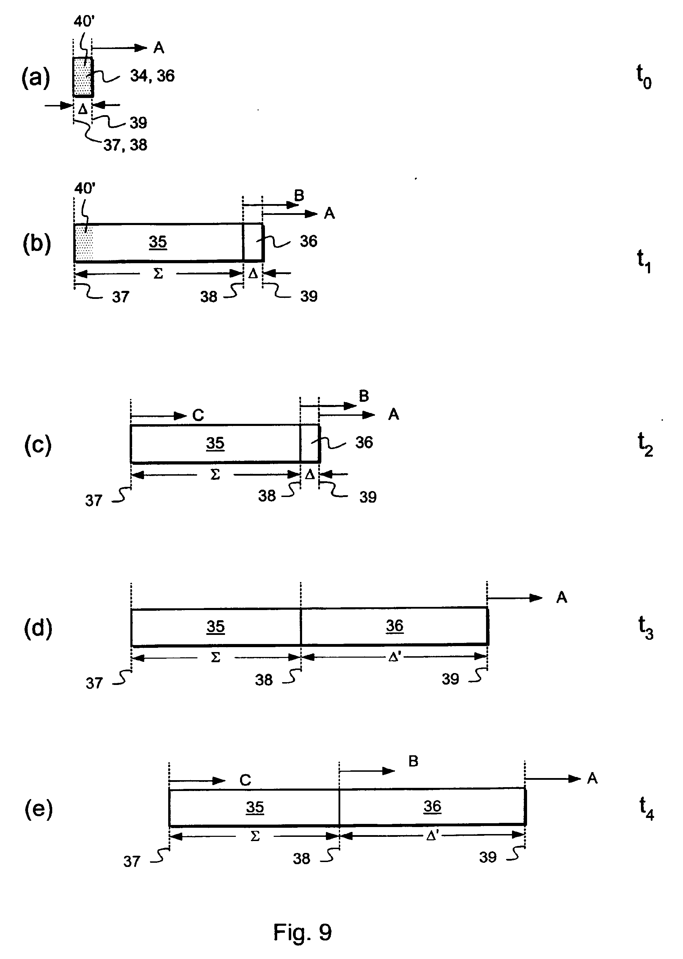

Referring to Figure 9a, when a user selects a channel, a dynamic view buffer 34 is created on the hard disk 14 into which live feed 40 (Figure 4) is fed. Thus, the live-view delta buffer 36 begins to grow, as indicated by arrow 'A'. A first amount of content 40', placed at the beginning of the dynamic view buffer 34, is shown as a shaded portion in Figure 9a. Playback is preferably initiated as soon as possible to minimize lag Δ between the live position 39 and view position 38. This point in time may be labelled time t₀.

### Playback

Referring to Figure 9b, as the user watches television, the view position 38 moves along the dynamic view buffer 34 and content 41 (Figure 4) is read. Thus, the instant replay buffer 35 grows, as indicated by arrow 'B', until, at a time t₁ > t₀, it reaches a predetermined size Σ. The live-view delta buffer 36 remains the same size, namely Δ. Thereafter, the dynamic view buffer 34 is cropped to maintain the size of the instant replay buffer 35.

Referring to Figure 9c, the size of the instant replay buffer 35 is maintained by cropping the dynamic view buffer 34, as shown by arrow 'C', at the same rate as data 41 for viewing is read. Thus, as live feed is fed into the end 39 of the dynamic view buffer 34, content is deleted from the beginning 37. Consequently, the content 40' at the beginning of the dynamic view buffer 34 is eventually erased.

### Live pause

Referring to Figure 9d, the user pauses live playback using the remote control 3 (Figure 1). The view position 38 is held and cropping is suspended. However, live feed continues to be supplied into the beginning 39 of the dynamic view buffer 34. Thus, the live-view delta buffer 36 and the lag Δ begin to grow. At time t₃, the live-view delta buffer 36 has grown to Δ', where Δ' > Δ.

### Resuming playback

Referring to Figure 9e, the user resumes playback using the remote control 3 (Figure 1). Live feed continues to be supplied to the end 39 of the dynamic view buffer 34, as shown by arrow 'A', read-out of content and transfer of data from the live-view delta buffer 36 to the instant replay buffer 35 resumes, as shown by arrow 'B' and cropping of the dynamic view buffer 34 is also resumed, as indicated by arrow 'C'.

### Replay

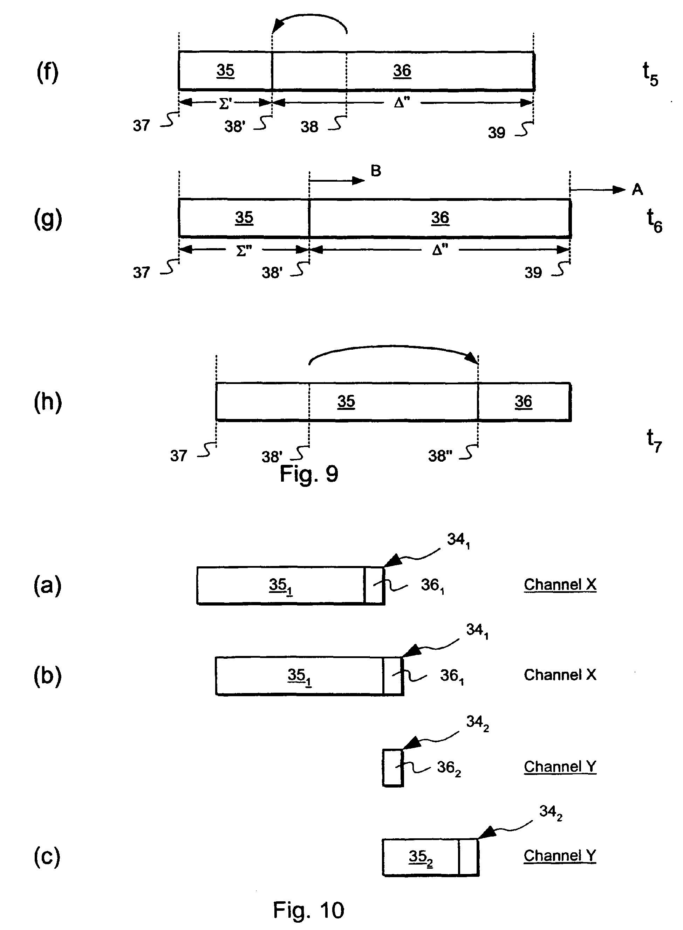

Referring to Figure 9f, the user can replay content using the remote control 3 (Figure 1). The view position 38 jumps back a predetermined number of bytes to a back view position 38'. Playback thereafter continues.

Referring to Figure 9g, if the jump back causes the instant replay buffer 35 to have a size Σ", such that Σ" < Σ, then cropping is suspended during playback, until it reaches the predetermined limit Σ.

### Fast forward

Referring to Figure 9h, the user can also jump forward. The back view position 38' jumps forward a predetermined number of bytes to a forward view position 38". Playback thereafter continues. The size of the instant replay buffer 35 may also be adjusted to the predetermined limit Σ.

### Changing channel

Referring to Figure 10a, an existing dynamic view buffer 34₁ is maintained while the user watches a channel, in this case Channel X, in a manner hereinbefore described.

Referring to Figure 10b, if a user changes channel, to Channel Y, live feed to the existing dynamic view buffer 34₁ is suspended, a new dynamic view buffer 34₂ is created and live feed is fed to the new dynamic view buffer 34₂.

Referring to Figure 10c, the existing dynamic view buffer 34₁ is erased, thus leaving the new dynamic view buffer 34₂.

### Recording

A process by which a user can record content for later viewing will now be described:

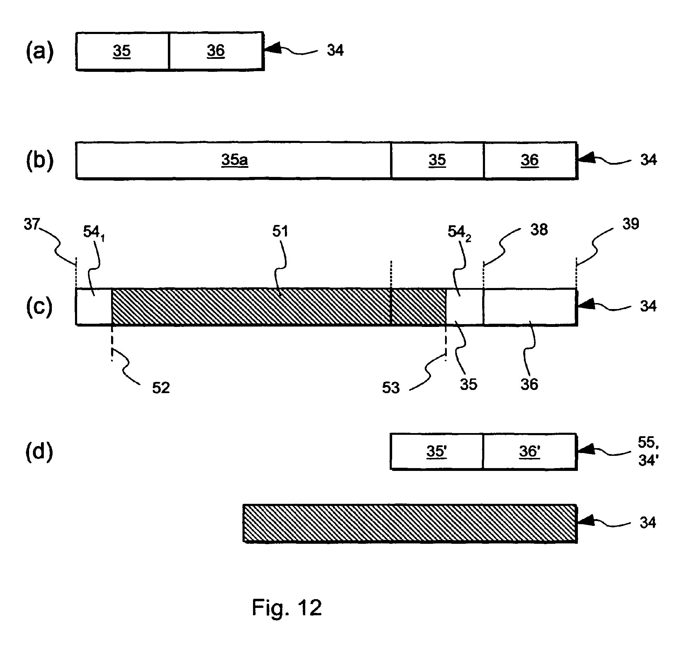

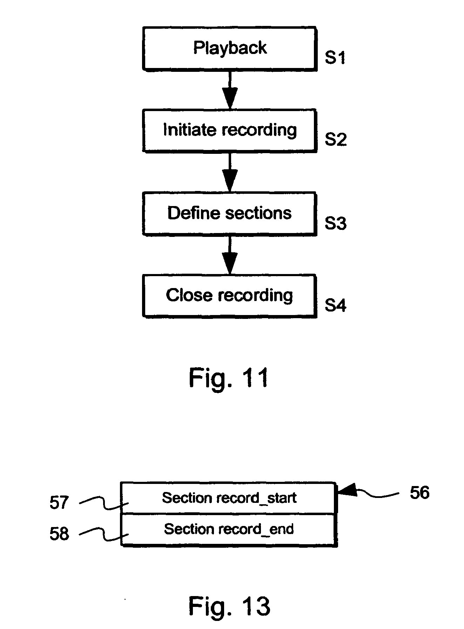

Referring to Figures 11 and 12a, a dynamic view buffer 34 is created and content played back in a manner hereinbefore described (step S1).

Referring now to Figures 11 and 12b, the user instructs the digital receiver 1 that he wishes to record a program. The digital receiver 1 responds by initiating recording (step S2). This comprises disabling cropping to prevent erasure of potentially wanted content. Thus, the dynamic view buffer includes a temporary instant replay buffer portion 35a at the beginning of the dynamic view buffer 34.

Referring now to Figures 11 and 12c, the user identifies a section 51 that they wish to record (step S3). A start 52 and end 53 of the section 51 to be recorded is marked. This may be done by the user viewing the content of the dynamic view buffer 34 at a normal or accelerated rate, optionally pausing playback, and instructing the digital receiver 1 to put down a **record_start** or **record_end** mark. The marks are stored as metadata in either a separate file on the hard disk 14 or in flash memory 13. As a result of the user's selection, one or more sections 54₁, 54₂ of the dynamic view buffer 34 are not selected to be recorded.

Referring now to Figures 11 and 12d, the user instructs the digital receiver 1 that they have finished marking-up the section 51 (step S4). The section 51 is recorded in a file using copy, crop and truncate operations hereinbefore described. The dynamic view buffer is purged of the complete or partial section 51 that is recorded. As will be explained later the dynamic view buffer 34 becomes the record file, while a new file is created and becomes a new dynamic view buffer 34'.

Playback is then resumed and cropping is re-enabled.

### Recording - Section record marker file

The process at steps S2 and 3 will now be described in more detail:

Referring to Figures 11, 12c and 13, when a recording is initiated, a section record marker file 56 is created on the hard disk 14 or in memory, such as DRAM 10 or flash memory 13.

The start 52 and end 53 of the section 51 are recorded in the recorder marker file 56 as record_start 57 and record_end 58 marks respectively. Each mark 57, 58 comprises meta-data pointing to a position 57, 58 within the dynamic view buffer 34. Preferably, the meta-data point to the positions 57, 58 relative to end 39 of the dynamic view buffer 34. However, the meta-data may point to the positions 57, 58 relative to beginning 37 of the dynamic view buffer 34, provided pointers are updated whenever a crop or crop-to-file operation is performed resulting in a change of the position of the start 37 of the dynamic view buffer 34.

### Recording - section recording and dynamic view buffer purging

The process at step S4 will now be described in more detail:

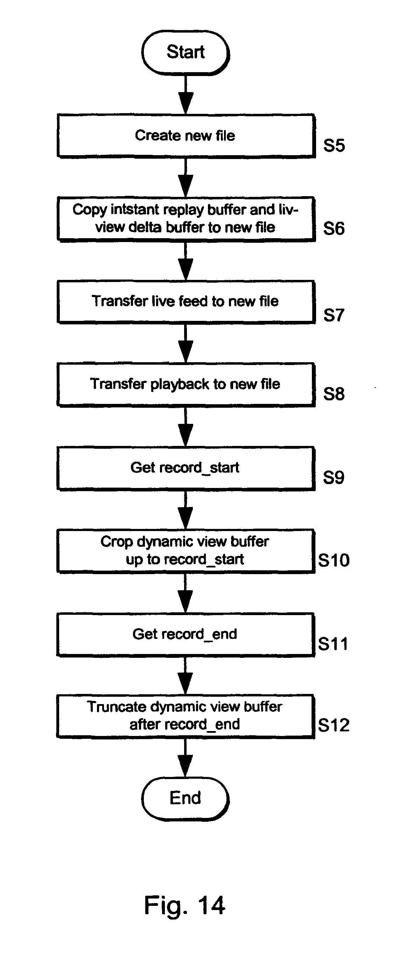

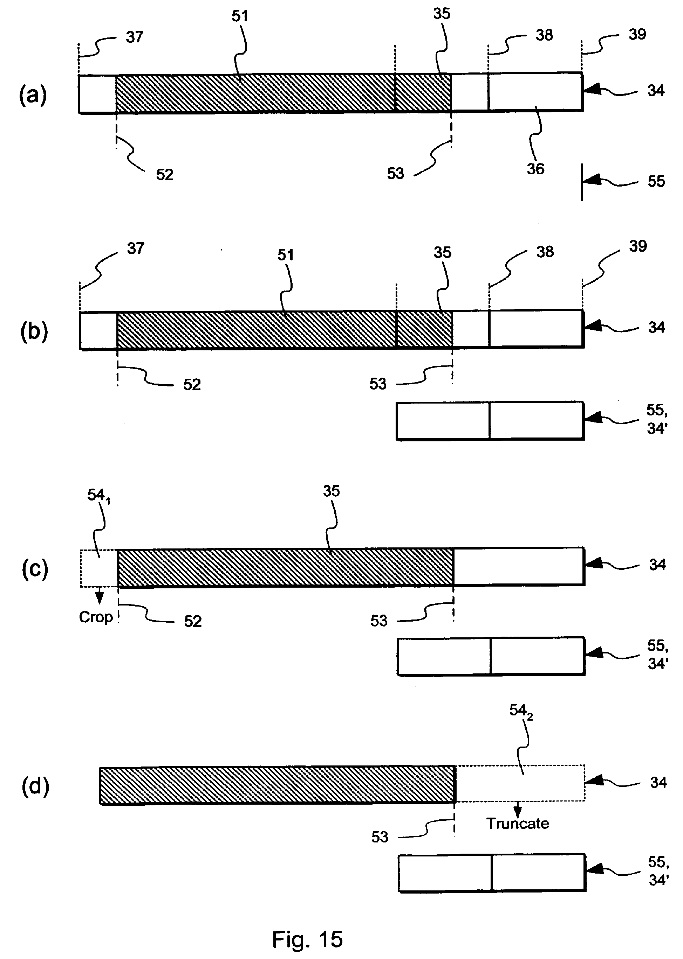

Referring to Figures 14 and 15a, the dynamic view buffer engine 32 (Figure 3) creates a new file 55 which will become a new dynamic view buffer file (step S5).

Referring to Figure 15b, the engine 32 copies the instant replay buffer 35 and the live-delta buffer 36, but not the temporary instant replay buffer portion 35a, to the new file 55 (step S6). It then transfers the live feed and playback to the new file 55 (steps S7 & S8). Thus, the new file 55 becomes the dynamic view buffer 34'.

Referring to Figure 15c, the dynamic view buffer engine 32 (Figure 3) retrieves the record_start marker 57 from the section record marker file 56 (step S9). A part 54₁ preceding the record_start 52 pointed to by the record_start marker 57 is cropped (step S10).

Referring to Figure 15d, the dynamic view buffer engine 32 (Figure 3) then retrieves the record_end marker 58 (step S11). A part 54₂ following the record_end 53 pointed to by the record_end marker 58 is deleted (step S12).

Thus, the original dynamic view buffer 34 becomes a record file, while the file 55 becomes the new dynamic view buffer 34'.

It will be appreciated that many modifications may be made to the embodiment described above. For example, the storage may comprise a random-access memory and may include a magnetic, electric or optical storage medium. A non-volatile solid-state memory, for example a semiconductor memory, can be used instead of a hard disk to store the dynamic view buffer. Data need not be compressed before being written to the dynamic view buffer.

## Claims

1. A method of digital recording comprising:
receiving a stream of digital content (40);
adding the stream of content to a first end (39) of a file (34) while deleting content from a second end (37) of the file so as to maintain a given duration of content in the file; and
reading out content from an intermediate point (38) between the first and second ends of the file;
wherein a first part (36) of a file lies between the first end of the file and the intermediate point and wherein another part (35; 35, 35a) of the file lies between the intermediate point and the second end of the file;
the method further comprising, in response to user instruction:
suspending deletion of content from the second end of the file; and
dividing the other part of the file into second and third parts (35, 35a) at a dividing point which would have been the second end of the file if deletion of content had not been suspended, the second part of the file comprises content which lies between the intermediate point and the dividing point and the third part of the file which comprises content between the dividing point and the second end of the file and which would have been deleted had deletion of content not been suspended;
the method further comprising:
receiving user instructions to identify which content to record;
creating a new file (55; 34');
copying the first and second parts of the file from the file to the new file; and
deleting, from the file, content which is not identified as the content to be recorded.

2. A method according to claim 1, further comprising, after copying the first and second parts (36, 35) of the file (34) from the file to the new file (55; 34'):
adding new content to a first end of a new file and deleting old content from a second end of the new file so as to maintain a given duration of content in the new file; and
reading out content from an intermediate point between the first and second ends of the new file, wherein a first part of a file lies between the first end of the new file and the intermediate point and a second part of the new file lies between the intermediate point and the second end of the new file

3. A method according to claim 1 or 2, wherein the intermediate point (38) is at the first end (39) of the file (34).

4. A method according to any preceding claim, wherein the stream of data (40) is encoded.

5. A method according to claim 4, wherein the stream of encoded data (40) is compressed.

6. A method according to claim 5, wherein the stream of encoded data (40) is encoded according to an MPEG standard.

7. A method according to claim 6, comprising:
decoding content (41) read out from the file (55).

8. A computer program for executing a method according to any preceding claim.

9. A digital recording device comprising:
a storage medium (18); and
a processor (9);
wherein the processor is configured:
to receive a stream of digital television content (40);
to add the stream of content to a first end (39) of a file (34) while deleting content from a second end (37) of the file so as to maintain a given duration of content in the file; and
to read out content from an intermediate point (38) between the first and second ends of the file;
wherein a first part (36) of a file lies between the first end of the file and the intermediate point and wherein another part (35; 35, 35a) of the file lies between the intermediate point and the second end of the file;
wherein the processor is further configured, in response to user instruction:
to suspend deletion of content from the second end of the file; and
to divide the other part of the file into second and third parts (35, 35a) at a dividing point which would have been the second end of the file if deletion of content had not been suspended, the second part of the file comprises content which lies between the intermediate point and the dividing point and the third part of the file which comprises content between the dividing point and the second end of the file and which would have been deleted had deletion of content not been suspended;
wherein the processor is further configured:
to receive user instructions to identify content to record;
to create a new file (55; 34');
to copy the first and second parts of the file from the file to the new file; and
to delete, from the file, content which is not identified as the content to be recorded.

10. A digital television receiver (1) including the digital recording device according to claim 9.

11. A digital television set (2) including the digital recording device according to claim 9.

## Patentansprüche

1. Digitales Aufzeichnungsverfahren, umfassend:
- Empfangen eines Datenstroms mit digitalem Inhalt (40);
- Hinzufügen des Inhaltsdatenstroms zu einem ersten Ende (39) einer Datei (34), während Inhalt an einem zweiten Ende (37) der Datei gelöscht wird, um eine gegebene Dauer des Inhalts in der Datei beizubehalten; und
- Auslesen von Inhalt von einer Zwischenstelle (38) zwischen dem ersten und dem zweiten Ende der Datei;
- wobei ein erster Teil (36) einer Datei zwischen dem ersten Ende der Datei und der Zwischenstelle liegt und wobei ein anderer Teil (35; 35, 35a) der Datei zwischen der Zwischenstelle und dem zweiten Ende der Datei liegt;
wobei das Verfahren weiter, in Reaktion auf eine Benutzeranweisung, umfasst:
- Aufheben des Löschens von Inhalt an dem zweiten Ende der Datei; und
- Aufteilen des anderen Teils der Datei in einen zweiten und einen dritten Teil (35, 35a) an einer Aufteilungsstelle, die das zweite Ende der Datei geworden wäre, falls das Löschen des Inhalts nicht aufgehoben worden wäre, wobei der zweite Teil der Datei Inhalt umfasst, der zwischen der Zwischenstelle und der Aufteilungsstelle liegt, und wobei der dritte Teil der Datei Inhalt zwischen der Aufteilungsstelle und dem zweiten Ende der Datei umfasst, und der gelöscht worden wäre, falls das Löschen von Inhalt nicht aufgehoben worden wäre;
wobei das Verfahren weiter umfasst:
- Empfangen von Benutzeranweisungen, um anzugeben, welcher Inhalt aufzuzeichnen ist;
- Erzeugen einer neuen Datei (55; 34');
- Kopieren des ersten und des zweiten Teils der Datei von der Datei in die neue Datei; und
- Löschen von Inhalt aus der Datei, der nicht als der aufzuzeichnende Inhalt angegeben ist.

2. Verfahren nach Anspruch 1, weiter umfassend, nach dem Kopieren des ersten und des zweiten Teils (36, 35) der Datei (34) von der Datei in die neue Datei (55; 34'):
- Hinzufügen von neuem Inhalt zu einem ersten Ende einer neuen Datei und Löschen von altem Inhalt an einem zweiten Ende der neuen Datei, um eine gegebene Dauer von Inhalt in der neuen Datei beizubehalten; und
- Auslesen von Inhalt von einer Zwischenstelle zwischen dem ersten und dem zweiten Ende der neuen Datei;
- wobei ein erster Teil einer Datei zwischen dem ersten Ende der neuen Datei und der Zwischenstelle liegt und wobei ein zweiter Teil der neuen Datei zwischen der Zwischenstelle und dem zweiten Ende der neuen Datei liegt.

3. Verfahren nach Anspruch 1 oder 2, wobei sich die Zwischenstelle (38) an dem ersten Ende (39) der Datei (34) befindet.

4. Verfahren nach irgendeinem der vorhergehenden Ansprüche, wobei der Datenstrom (40) kodiert ist.

5. Verfahren nach Anspruch 4, wobei der kodierte Datenstrom (40) komprimiert ist.

6. Verfahren nach Anspruch 5, wobei der kodierte Datenstrom (40) gemäß einem MPEG-Standard kodiert ist.

7. Verfahren nach Anspruch 6, umfassend:
- Dekodieren von Inhalt (41), der aus der Datei (55) ausgelesen wird.

8. Computerprogramm zum Ausführen eines Verfahrens gemäß irgendeinem vorhergehenden Anspruch.

9. Digitale Aufzeichnungsvorrichtung, umfassend:
- ein Speichermedium (18); und
- einen Prozessor (9);
wobei der Prozessor konfiguriert ist:
- zum Empfangen eines Datenstroms mit digitalem Fernsehinhalt (40);
- zum Hinzufügen des Inhaltsdatenstroms zu einem ersten Ende (39) einer Datei (34), während Inhalt an einem zweiten Ende (37) der Datei gelöscht wird, um eine gegebene Dauer des Inhalts in der Datei beizubehalten; und
- zum Auslesen von Inhalt von einer Zwischenstelle (38) zwischen dem ersten und dem zweiten Ende der Datei;
wobei ein erster Teil (36) einer Datei zwischen dem ersten Ende der Datei und der Zwischenstelle liegt und wobei ein anderer Teil (35; 35, 35a) der Datei zwischen der Zwischenstelle und dem zweiten Ende der Datei liegt;
wobei der Prozessor weiter konfiguriert ist, in Reaktion auf eine Benutzeranweisung:
- das Löschen von Inhalt an dem zweiten Ende der Datei aufzuheben; und
- den anderen Teil der Datei in einen zweiten und einen dritten Teil (35, 35a) aufzuteilen, an einer Aufteilungsstelle, die das zweite Ende der Datei geworden wäre, falls das Löschen des Inhalts nicht aufgehoben worden wäre, wobei der zweite Teil der Datei Inhalt umfasst, der zwischen der Zwischenstelle und der Aufteilungsstelle liegt, und wobei der dritte Teil der Datei Inhalt zwischen der Aufteilungsstelle und dem zweiten Ende der Datei umfasst, und der gelöscht worden wäre, falls das Löschen von Inhalt nicht aufgehoben worden wäre;
wobei der Prozessor weiter konfiguriert ist:
- zum Empfangen von Benutzeranweisungen, um Inhalt anzugeben, der aufzuzeichnen ist;
- zum Erzeugen einer neuen Datei (55; 34');
- zum Kopieren des ersten und des zweiten Teils der Datei von der Datei in die neue Datei; und
- zum Löschen von Inhalt aus der Datei, der nicht als der aufzuzeichnende Inhalt angegeben ist.

10. Digitaler Fernsehempfänger (1), der die digitale Aufzeichnungsvorrichtung nach Anspruch 9 einschließt.

11. Digitaler Fernseher (2), der die digitale Aufzeichnungsvorrichtung nach Anspruch 9 einschließt.

## Revendications

1. Procédé d'enregistrement numérique comprenant les étapes consistant à :
recevoir un flux de contenu numérique (40) ;
ajouter le flux de contenu à une première extrémité (39) d'un fichier (34) tout en effaçant du contenu à partir d'une seconde extrémité (37) du fichier de façon à maintenir une durée donnée de contenu dans le fichier ; et
extraire du contenu à partir d'un point intermédiaire (38) entre la première et la seconde extrémités du fichier ;
dans lequel une première partie (36) d'un fichier s'étend entre la première extrémité du fichier et le point intermédiaire et dans lequel une autre partie (35 ; 35, 35a) du fichier s'étend entre le point intermédiaire et la seconde extrémité du fichier ;
le procédé comprenant en outre, en réponse à une instruction de l'utilisateur, les étapes consistant à :
suspendre l'effacement de contenu à partir de la seconde extrémité du fichier ; et
diviser l'autre partie du fichier en une seconde et une troisième partie (35, 35a) au niveau d'un point de division qui aurait été la seconde extrémité du fichier si l'effacement de contenu n'avait pas été suspendu, la seconde partie du fichier comprenant du contenu qui s'étend entre le point intermédiaire et le point de division et la troisième partie du fichier qui comprend du contenu entre du point de division et la seconde extrémité du fichier et qui aurait été effacé si l'effacement de contenu n'avait pas été suspendu ;
le procédé comprenant en outre les étapes consistant à :
recevoir des instructions de l'utilisateur pour identifier quel contenu enregistrer ;
créer un nouveau fichier (55 ; 34') ;
copier la première et de la seconde parties du fichier dans le nouveau fichier ; et
effacer, à partir du fichier, du contenu qui n'est pas identifié comme le contenu devant être enregistré.

2. Procédé selon la revendication 1, comprenant en outre, après la copie de la première et de la seconde partie (36, 35) du fichier (34) à partir du fichier vers le nouveau fichier (55 ; 34) les étapes consistant à :
ajouter du nouveau contenu à une première extrémité d'un nouveau fichier et effacer de l'ancien contenu à partir d'une seconde extrémité du nouveau fichier de façon à maintenir une durée donnée de contenu dans le nouveau fichier ; et
extraire du contenu à partir d'un point intermédiaire entre la première et la seconde extrémité du nouveau fichier, dans lequel une première partie d'un fichier s'étend entre la première extrémité du nouveau fichier et le point intermédiaire et une seconde partie du nouveau fichier s'étend entre le point intermédiaire et la seconde extrémité du nouveau fichier.

3. Procédé selon les revendications 1 ou 2, dans lequel le point intermédiaire (38) est localisé au niveau de la première extrémité (39) du fichier (34).

4. Procédé selon l'une quelconque des revendications précédentes, dans lequel le flux de données (40) est codé.

5. Procédé selon la revendication 4, dans lequel le flux de données codées (40) est compressé.

6. Procédé selon la revendication 5, dans lequel le flux de données codées (40) est codé selon une norme MPEG.

7. Procédé selon la revendication 6, comprenant l'étape consistant à :
décoder du contenu (41) lu à partir du fichier (55).

8. Programme informatique pour exécuter un procédé selon l'une quelconque des revendications précédentes.

9. Appareil d'enregistrement numérique comprenant :
un support de stockage (18) ; et
un processeur (9) ;
dans lequel le processeur est configuré :
pour recevoir un flux de contenu de télévision numérique (40) ;
pour ajouter le flux du contenu à une première extrémité (39) d'un fichier (34) tout en effaçant le contenu à partir d'une seconde extrémité (37) du fichier de façon à maintenir une durée donnée de contenu dans le fichier ; et
pour extraire du contenu à partir d'un point intermédiaire (38) entre la première et la seconde extrémités du fichier ;
dans lequel une première partie (36) d'un fichier s'étend entre la première extrémité du fichier et le point intermédiaire et dans lequel une autre partie (35 ; 35, 35a) du fichier s'étend entre le point intermédiaire et la seconde extrémité du fichier ;
dans lequel le processeur est en outre configuré, en réponse à une instruction de l'utilisateur :
pour suspendre l'effacement de contenu à partir de la seconde extrémité du fichier ; et
pour diviser l'autre partie du fichier en une seconde et une troisième partie (35, 35a) au niveau d'un point de division qui aurait été la seconde extrémité du fichier si l'effacement de contenu n'avait pas été suspendu, la seconde partie du fichier comprenant du contenu qui s'étend entre le point intermédiaire et le point de division et la troisième partie du fichier qui comprend du contenu entre le point de division et la seconde extrémité du fichier et qui aurait été effacé si l'effacement de contenu n'avait pas été suspendu ;
dans lequel le processeur est en outre configuré :
pour recevoir les instructions de l'utilisateur pour identifier du contenu à enregistrer ;
pour créer un nouveau fichier (55 ; 34') ;
pour copier la première et la seconde partie du fichier à partir du fichier vers le nouveau fichier ; et
pour effacer, à partir du fichier, du contenu qui n'est pas identifié comme le contenu devant être enregistré.

10. Récepteur de télévision numérique (1) comprenant l'appareil d'enregistrement numérique selon la revendication 9.

11. Poste de télévision numérique (2) comprenant l'appareil d'enregistrement numérique selon la revendication 9.
